# EUROPEAN PATENT APPLICATION

(11) **EP 1 897 766 A2**
(43) Date of publication of application: **12.03.2008**
(21) Application number: 07115801.8
(22) Date of filing: 06.09.2007
(51) Int. Cl.: B60R 22/02, B60R 22/26

(54) **Vehicle Seat with Seat Belt**

(30) Priority: 07.09.2006 GB 0617553
(71) Applicant: Rescroft Limited, East Moons Moat Redditch, Worcestershire B98 0RE (GB)
(72) Inventor: Kimberley, Jason, Redditch Worcestershire, B98 0RE (GB)
(74) Representative: Wardley, Diana Mary

(57) **Abstract**

A vehicle seat (10) fitted with an all ages seat belt (16) is described. The seat has a squab (12) and a cushion part (14). The seat belt includes a main strap (18) with upper and lower anchorage points to a first side of the seat and a tongue (20) on the main strap for receipt in a socket (22) providing a lower anchorage point to a second side of the seat, such that in use the seat belt provides a lap strap (18a) and a shoulder strap (18b). The seat belt further includes an additional strap (24) having upper and lower anchorage points on the first side of the seat, and an adjuster (30) through which the main strap and additional strap pass, which can be slid up and down the straps to alter the effective length of the shoulder strap. The upper anchorage points for the main strap and additional strap are within the squab, and the main and additional straps emerge from the squab through an upper escutcheon (26). The upper escutcheon provides an opening of sufficient size to receive the adjuster within it when slid fully up the straps.

## Description

The invention relates to a vehicle seat with a seat belt, and in particular to one having an "all ages" belt, for use in minibuses, coaches, ambulances and the like.

In recent years, following a number of accidents involving minibuses, coaches and the like, it has become the norm to provide seat belts in such vehicles, and in some countries has become compulsory to do so. However, a seat belt that fits and retains an adult securely will not fit and retain a smaller passenger, such as a child, as well, as securely or indeed as safely. This has led to the development of what are termed in the industry as "all ages" belts. They are also called "generation" belts, "height adjustable" belts and "baby adjuster" belts.

Most vehicle seat belts are three point belts, which have a lap strap going across the wearers lap and a shoulder strap going diagonally across the wearers body and over one shoulder, the two parts being formed from one continuous piece of webbing. The three points referred to in the name of the belt are the three anchorage points, one to either side of the lap and one over one shoulder.

The location of the anchorage points of three point belts determine the size of people that the belts fit. A belt set up for an adult will have a shoulder belt that crosses a child's neck which is not suitable or safe. Booster cushions can be used to raise a child up to make the belt fit them better, but clearly these are bulky and not always available. Thus "all ages" belts have been developed to make three point belts adjustable such that they are more adjustable for smaller users.

All ages belts include an additional webbing strap which extends from the shoulder anchorage point to the lap anchorage point on the same side of the seat. This additional strap is not extendable. An adjuster, in the form of a slider, is provided through which the shoulder strap and the additional strap pass, such that the adjuster can be slid up and down these straps. When the seat belt is worn by an adult the adjuster is moved to the top of the straps, such that the shoulder strap passes diagonally across the wearers body from close to the shoulder anchorage point. When the seat belt is worn by a child the adjuster is slid down the straps such that the shoulder strap is held vertically against the additional strap above the adjuster and then permitted to pass diagonally across the wearers body only from the adjuster downwardly. Thus the all ages belt keeps the shoulder strap from passing across the child's neck.

However, known seats fitted with "all ages" belts suffer from a number of problems, one of which this invention seeks to address.

According to the present invention there is provided a vehicle seat fitted with an all ages seat belt, the seat having a squab and a cushion part, the seat belt including a main strap with upper and lower anchorage points to a first side of the seat and a tongue on the main strap for receipt in a socket providing a lower anchorage point to a second side of the seat, such that in use the seat belt provides a lap strap and a shoulder strap,
the seat belt further including an additional strap having upper and lower anchorage points on the first side of the seat, and an adjuster through which the main strap and additional strap pass, which can be slid up and down the straps to alter the effective length of the shoulder strap,
the upper anchorage points for the main strap and additional strap being within the squab, and the main and additional straps emerging from the squab through an upper escutcheon, wherein the upper escutcheon provides an opening of sufficient size to receive the adjuster within it when slid fully up the straps.

Preferably the upper escutcheon further provides at least one stop to prevent the adjuster going so far into the opening that a wearer cannot readily pull it back out for use.

Conveniently the upper escutcheon includes a flange around the recess.

The upper escutcheon may further include a recess on the front surface of the flange for receipt of a sign providing information on correct use of the seat belt.

The upper escutcheon may further include a recess around the rear surface of the flange for receipt of trim fitted to the seat.

Preferably the seat further includes a location bar within the squab over which the main belt passes between the upper anchorage point and the upper escutcheon.

Preferably the seat further includes a housing which receives the upper escutcheon and which is secured to a frame within the squab. Conveniently the housing is also secured to the location bar.

An embodiment of the present invention, by way of example only, will now be described with reference to the accompanying drawings in which:
Figure 1 is a front view of vehicle seat fitted with an all ages belt according to the present invention;
Figure 2 is a view along the dashed line of B-B in Figure 1 in the direction of the arrows;
Figure 3 is a view of the upper part of the seat along the same line;
Figure 4 is the same view as Figure 3 but with the adjuster slid up the belts and into the upper escutcheon;
Figure 5 is a front view of the upper escutcheon;
Figure 6 is a section through the upper escutcheon along the line A-A in Figure 5, in the direction of the arrows, and
Figure 7 shows (a) a rear view, (b) a section through the line A-A of (a), (c) a section through the line B-B of (b), and (d) a side view of a housing for receipt of the upper escutcheon of figures 5 and 6.

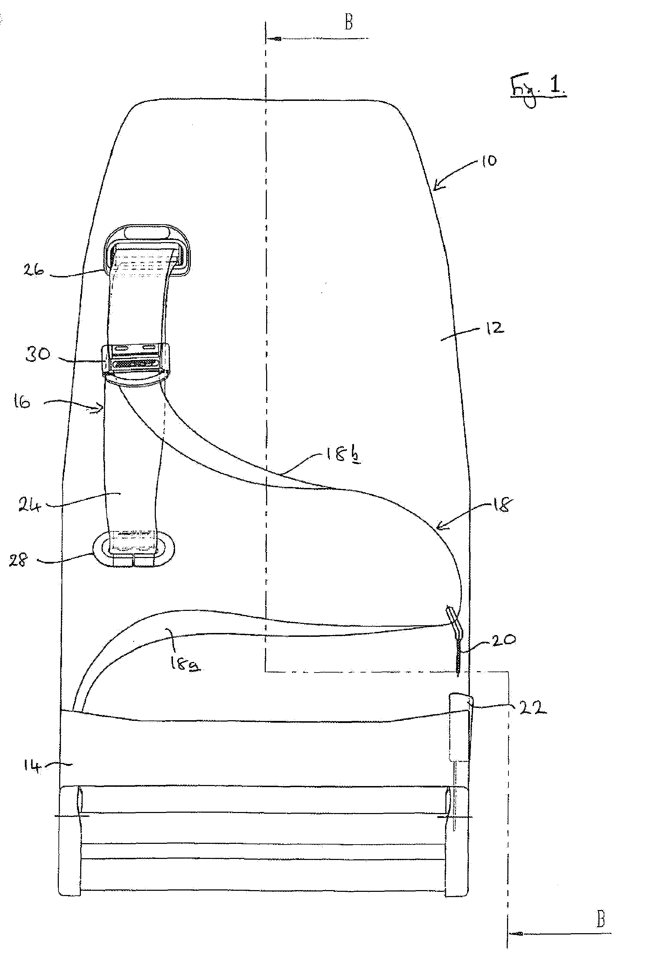

Referring to the Figures a vehicle seat 10 has a squab (or back part) 12 and a cushion part 14. A three point seat belt 16 includes a webbing strap 18 providing a lap strap 18a and a shoulder strap 18b, extending from the fixed lower anchorage point (not shown, but bottom left in Figure 1) to a fixed upper anchorage point (not shown, but within the squab middle left in Figure 1, and incorporating an inertia reel in known manner). The strap 18 passes from the upper anchorage point, over a location bar 34 (which may be a tube or other formation which can perform the appropriate function) which is fixed securely to a metal frame (not shown) within the squab 12, and out of the squab 12 through an upper escutcheon 26. The location bar 34 acts to redirect the strap 18 such that it is aligned correctly to pass through the upper escutcheon 26, and also helps to provide the required strength for the seat and seat belt anchorages combination to pass the rigorous safety tests required. The strap 18 carries a slidable buckle tongue 20 for receipt on a buckle socket 22 (often referred to as a belt tongue receiver) to provide the third anchorage point.

The seat belt 16 also includes an additional webbing strap 24 with a upper anchorage point 24a within an upper portion of the squab 12 and a lower anchorage point 24b within an lower portion of the squab 12. The additional webbing strap 24 passes from the upper anchorage point 24a out of the squab through an upper escutcheon 26, down the front of the squab 12 and back into the squab 12 through a lower escutcheon 28 to the lower anchorage point 24b. The lower escutcheon 28 is positioned at a suitable distance below the upper escutcheon 26 to ensure that sufficient adjustment of the belt 16 is possible.

The seat belt 16 also includes an adjuster 30 through which both the shoulder strap 18b and the additional strap 24 pass. The adjuster 30 is slidable up and down the straps 18b and 24 to alter the effective length of the shoulder strap 18b to fit the seat belt 16 to different sized wearers, as is known in the prior art.

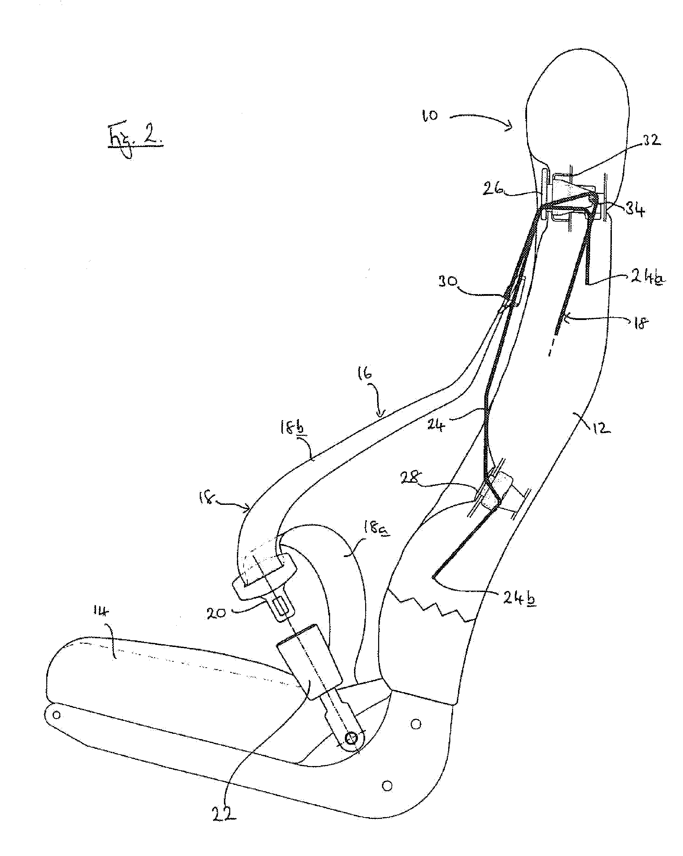

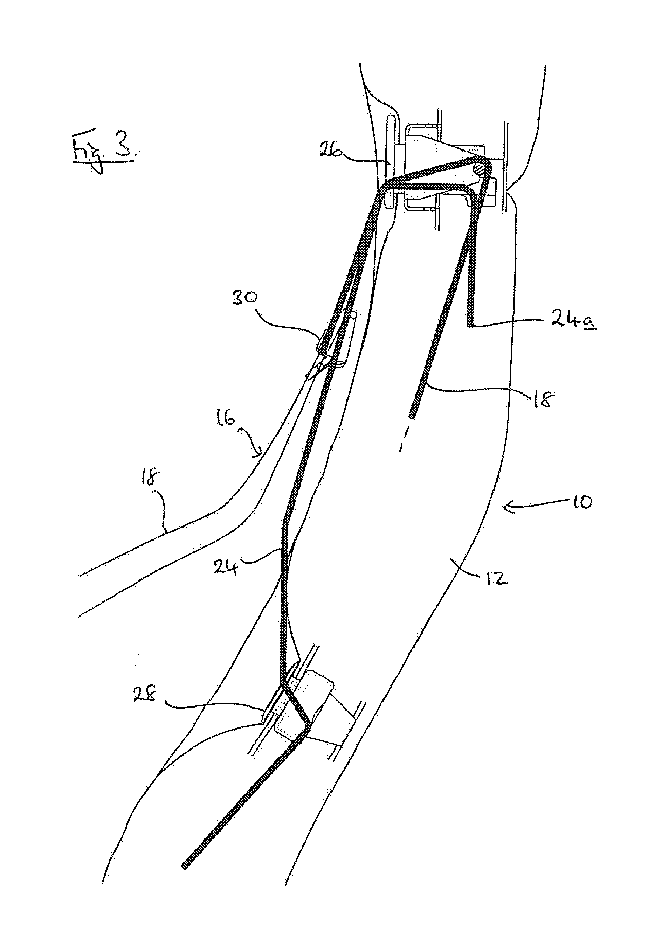

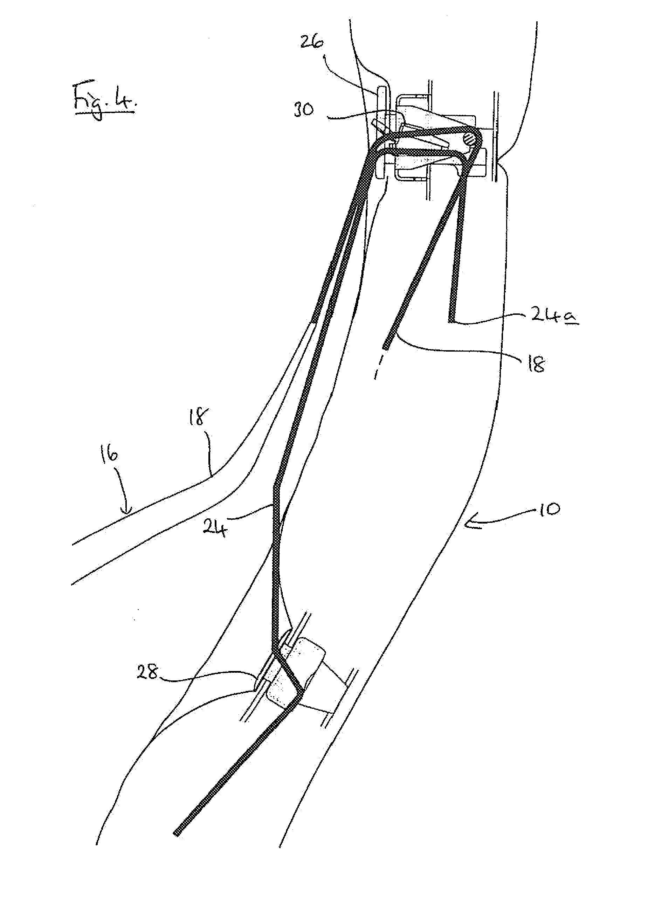

In Figures 1, 2 and 3 the adjuster 30 is shown part way down the straps 18b and 24, such that the effective length of the shoulder strap 18b is shorter and the seat belt 16 will fit a shorter person. For a shorter person still the adjuster is slid further down the straps 18b and 24 towards the lower escutcheon 28. for a taller person the adjuster 30 is slid to the top of the belts 18b and 24, and stowed within the upper escutcheon 26 as shown in Figure 4.

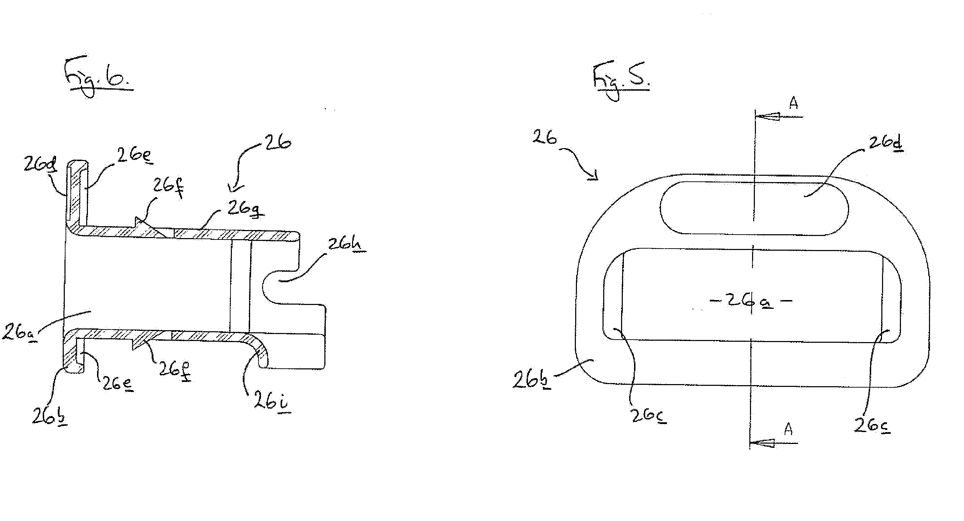

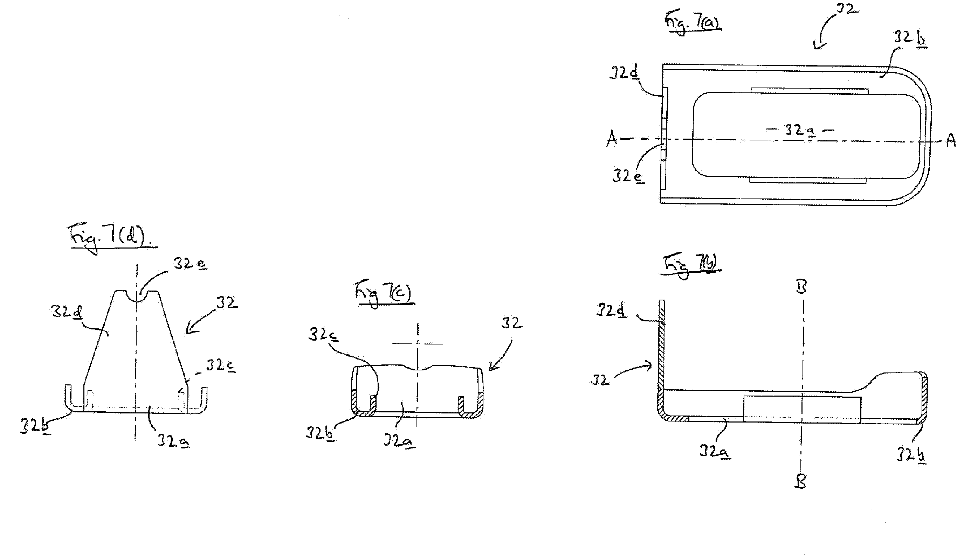

The upper escutcheon 26 is shown in more detail in Figures 5 and 6. It provides an recess 26a of sufficient size to receive the adjuster 30, defined by walls 26g, and surrounded by a flange 26b. Stops 26c are provided on either side towards the rear of the recess 26a to prevent the adjuster 30 going too far back into the opening 26a such that a wearer of the seat belt 16 would have difficulty pulling it back out again. A shallow recess 26d is provided on an upper portion of the flange 26b for receipt of informative sign (not shown) bearing images to assist a wearer to use the seat belt 16 correctly.

The upper escutcheon 26 also includes a shallow recess 26e running around the rear of the flange 26b into which the trim on the seat 10 expands as this provides a good finish to the fitment of the escutcheon into the seat 10. Clips 26f are provided on the outer surfaces of the walls 26g which engage in a housing 32 within the squab 12, as will be described below. The rear portion of the walls 26g define, at the sides, locating formations 26h which locate onto the location bar 34 within the squab 12 as will also be described below, and a downward sweep 26i, at the bottom, which guides the additional strap 24 downwardly to its upper anchorage 24a.

The upper escutcheon 26 will generally be made from plastics material by injection moulding, however, it may be made from any suitable material.

Referring now to Figure 7 the housing 32 is shown in more detail. The housing 32 is in use secured within the squab 12 to the metal frame thereof. It has an opening 32a for receipt of the upper escutcheon 26 surrounded by a flange 32b which has rolled edges 32c to provide the strength required and to provide an edge for the clips of the upper escutcheon 26 to locate behind. On one side of the flange 32b there is an extended portion 32d by means of which the housing is secured to the metal frame within the squab 12. The extended portion 32d includes a locating formation 32e which locates on the location bar 34 as for the locating formation on the upper escutcheon 26. This helps to locate the housing 32 securely.

The housing 32 is formed of metal by pressing. But may be made of any suitable material and by any suitable process. The housing 32 as shown in Figure 7 can be used on either side of the seat 10, by being used with the extended portion 32d to the right or left as required.

The advantages of the present invention are as follows. For normal height wearers of the seat belt 16 who do not require to use the adjuster 30, the adjuster 30 is stowed out of the way such that it cannot dig into the back of their shoulder as might otherwise occur. Without the recess 26a to stow the adjuster 30 injury could be caused to the wearer in an accident if they are forced violently back onto the adjuster 30. In addition as, when the adjuster 30 is not required it is stowed largely out of sight, the seat 10 looks tidier.

The combination of the upper escutcheon 26, the housing 32 and the location bar 34 also provides the advantage that the strap 18 runs horizontally through the adjuster 30 when the adjuster 30 is received in the upper escutcheon 26. This is very important as this is one aspect of the seat belt 16 which determines whether the strap 18 returns well to the inertia reel when not in use. Prior art all ages seat belts have tended not to retract well due to excessive friction on their path.

The vehicle seat 10 illustrated in the Figures is of the type known as high back, often used in minibuses. The present invention may also be used in other types of vehicle seat, for example semi-high back where the squab is lower and the seat also includes a head restraint above the squab, although the problem which this invention addresses does not affect such seats.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A vehicle seat fitted with an all ages seat belt, the seat having a squab and a cushion part, the seat belt including a main strap with upper and lower anchorage points to a first side of the seat and a tongue on the main strap for receipt in a socket providing a lower anchorage point to a second side of the seat, such that in use the seat belt provides a lap strap and a shoulder strap, the seat belt further including an additional strap having upper and lower anchorage points on the first side of the seat, and an adjuster through which the main strap and additional strap pass, which can be slid up and down the straps to alter the effective length of the shoulder strap,
**characterised in that** the upper anchorage points for the main strap and additional strap are within the squab, and the main and additional straps emerge from the squab through an upper escutcheon, wherein the upper escutcheon provides an recess of sufficient size to receive the adjuster within it when slid fully up the straps.

2. A vehicle seat fitted with an all ages seat belt according to claim 1 **characterised in that** the upper escutcheon further provides at least one stop to prevent the adjuster going so far into the opening that a wearer cannot readily pull it back out for use.

3. A vehicle seat fitted with an all ages seat belt according to claim 1 or 2 **characterised in that** the upper escutcheon includes a flange around the recess.

4. A vehicle seat fitted with an all ages seat belt according to claim 3 **characterised in that** the upper escutcheon further includes a recess on the front surface of the flange for receipt of a sign providing information on correct use of the seat belt.

5. A vehicle seat fitted with an all ages seat belt according to claim 3 or 4 **characterised in that** the upper escutcheon further includes a recess around the rear surface of the flange for receipt of trim fitted to the seat.

6. A vehicle seat fitted with an all ages seat belt according to any one of the preceding claims **characterised in that** it further includes a location bar within the squab over which the main belt passes between the upper anchorage point and the upper escutcheon.

7. A vehicle seat fitted with an all ages seat belt according anyone of the preceding claims **characterised in that** it further includes a housing which receives the upper escutcheon and which is secured to a frame within the squab.

8. A vehicle seat fitted with an all ages seat belt according claim 7 as dependent on claim 6 **characterised in that** the housing is also secured to the location bar.
